**Europäisches Patentamt**

**European Patent Office**

**Office européen des brevets**

(19)

(11) Veröffentlichungsnummer : **0 270 640 B1**

(12)                           **EUROPÄISCHE PATENTSCHRIFT**

(45) Veröffentlichungstag der Patentschrift :
**22.01.92 Patentblatt 92/04**

(51) Int. Cl.$^5$ : **A01K 61/00, A01K 63/04**

(21) Anmeldenummer : **87904038.4**

(22) Anmeldetag : **10.06.87**

(86) Internationale Anmeldenummer :
**PCT/EP87/00302**

(87) Internationale Veröffentlichungsnummer :
**WO 87/07475 17.12.87 Gazette 87/28**

(54) **FISCHBECKEN ZUR INTENSIV-FISCHMAST UND VERFAHREN ZUM BETRIEB EINES DERARTIGEN FISCHBECKENS.**

(30) Priorität : **12.06.86 DE 3619757**

(43) Veröffentlichungstag der Anmeldung :
**15.06.88 Patentblatt 88/24**

(45) Bekanntmachung des Hinweises auf die Patenterteilung :
**22.01.92 Patentblatt 92/04**

(84) Benannte Vertragsstaaten :
**AT BE CH DE FR GB IT LI LU NL SE**

(56) Entgegenhaltungen :
**WO-A-00/1484**

(56) Entgegenhaltungen :
**DE-A-21 333 52**
**DE-A-23 605 69**
**DE-A-32 267 97**
**US-A- 4 067 809**

(73) Patentinhaber : **METZ MANNHEIM GMBH**
**Friedrich-Engelhorn-Strasse 5-9**
**W-6800 Mannheim 1 (DE)**

(72) Erfinder : **HARTUNG, Christoph**
**Am Weiherhaag 20b**
**W-6233 Kelkheim (DE)**

(74) Vertreter : **Meyer-Roedern, Giso, Dr.**
**Bergheimer Strasse 10-12**
**W-6900 Heidelberg 1 (DE)**

**EP 0 270 640 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

EP 0 270 640 B1

## Beschreibung

Die Erfindung betrifft eine Anlage zur Intensiv-Fischmast nach dem Oberbegriff des Patentanspruches 1, wie sie aus der US-A-4 067809 bekannt ist, und ein Verfahren zum Betrieb einer derartigen Anlage.

Intensiv-Fischmast in offenen Gewässern ist seit langem bekannt. Da das biologische Gleichgewicht derartiger offener Gewässer durch Schadstoffablagerungen immer stärker gestört wird und die Zuchtbedingungen dadurch immer schlechter werden, ist man zur Fischmast in Kunstteichen übergegangen. Diese bekannten Anlagen müssen jedoch mit erheblichem Aufwand, insbesondere an Frischwasser- und Flächenbedarf betrieben werden, so daß die Wirtschaftlichkeit der Mastverfahren in Frage gestellt ist. Weitere erhebliche Nachteile dieser bekannten Verfahren sind im ständigen Wassertemperaturwechsel während des Tag- und Nachtbetriebes und während der verschiedenen Jahreszeiten, den hohen Risiken durch Fischkrankheiten und den Gefahren durch in die Teiche eingeleitete Umweltgifte zu sehen.

Die US-A-4 067809 beschreibt ein biologisches Filter für Aquarien oder Fischzuchtanlagen, mit dem Wasser nach dem Belebtschlammverfahren (Nitrifikation) aufbereitet wird. Das Filter ist in dem Fischwasserbassin angeordnet. Es wird von unten angestromt und von dem aufzubereitenden Wasser in aufsteigender Strömung durchlaufen, so daß sich eine Zirkulationsströmung in dem Becken ergibt, die durch die Zufuhr von Luft an der Basis des Filters nach dem Mammut-Pumpen-Effekt aufrechterhalten wird.

Der vorliegenden Erfindung liegt die Aufgabe zugrunde, eine Anlage zur Intensiv-Fischmast und ein Verfahren zum Betrieb einer derartigen Anlage zu entwickeln, das ohne die erheblichen Risiken der bekannten Verfahren und mit großer Wirtschaftlichkeit unabhängig von Jahreszeiten und Wetterschwankungen betrieben werden kann.

Diese Aufgabe wird bei einem Fischbecken der eingangs beschriebenen Art erfindungsgemäß durch die kennzeichnenden Merkmale des Patentanspruches 1 gelöst. Die besondere Ausgestaltung des Fischbeckens mit dem Graben in der Längsmittelachse des Beckens und dem Füllkörper und der Schlauchanordnung zur Zuführung von Luft oder sauerstoff in diesem Graben gestattet auf besonders einfache und kostengünstige Art die Sauberhaltung des Fischwassers und seine Anreicherung mit Sauerstoff, so daß zwei wesentliche Grundbedingungen für die Gesundhaltung des Fischbestandes erfüllt sind.

Vorteilhafte Weiterbildungen der Anlage sind in den Ansprüchen 2 bis 6 gekennzeichnet. Ein Verfahren zum Betrieb der Anlage ist Inhalt der Ansprüche 7 bis 10.

Das Verfahren zeichnet sich besonders aus durch die wirkungsvolle Umwälzung des Fischwassers, seine Nitrifikation und die einfache Sauberhaltung der den Luftsauerstoff zuführenden Schläuche während des Betriebes der Fischbecken.

Die Erfindung wird nachfolgend anhand eines in der Zeichnung dargestellten Ausführungsbeispieles näher beschrieben und erläutert.

Es zeigen:

Figur 1: eine Draufsicht auf eine aus mehreren parallelgeschalteten Fischbecken bestehende Anlage;

Figur 2: einen Vertikalschnitt durch ein Absetzbecken der Anlage gemäß Figur 1;

Figur 3: einen Vertikalschnitt durch einen Teil eines Fischbeckens der Anlage gemäß Figur 1 mit einem eingesetzten Füllkörper;

Figur 4: einen horizontalen Querschnitt durch den Füllkörper gemäß Figur 3 und

Figur 5: ein schematisches Flußdiagramm der Anlage gemäß Figur 1.

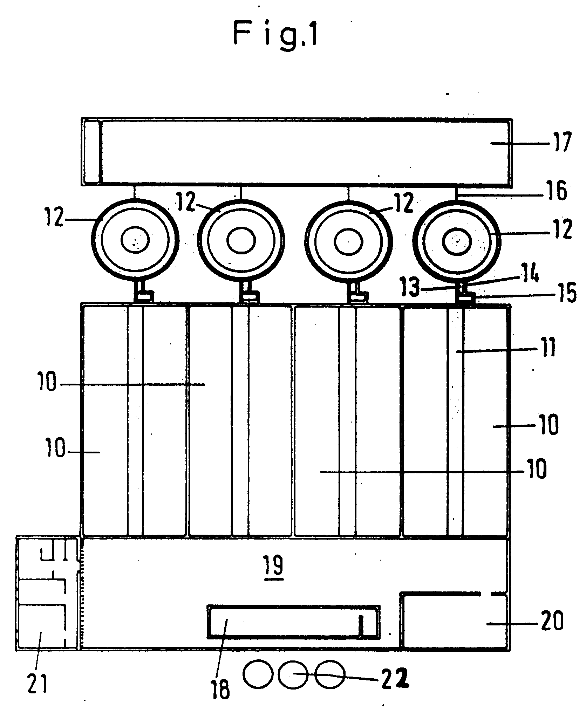

Die Anlage gemäß Figur 1 besteht aus vier nebeneinander angeordneten Fischbecken 10, die als Langbecken ausgebildet sind und in ihrer Mittelachse eine Vertiefung in Form eines Grabens 11 aufweisen. Jedem dieser Fischbecken 10 ist ein Absetzbecken 12 nachgeschaltet, die als Rundbecken ausgebildet sind und über Hin- und Rückleitungen 13 und 14 und eine Pumpe 15 mit dem jeweilig zugeordneten Fischbecken 10 verbunden sind. Die Absetzbecken 12 sind ferner über Leitungen 16 mit einem Sammelbecken 17 für die aus den Absetzbecken 12 abgesaugten verunreinigten Wasser bzw. Schlamm verbunden.

Die Absetzbecken 12 liegen vor der einen der beiden Stirnwände der Langbecken 10; an der anderen Stirnfront ist ein Bedienungsraum 19 für das die Anlage betreibende Personal vorgesehen. In diesem Bedienungsraum 19 ist ein Halterungsbecken 18 zur Aufnahme der den Fischbecken 10 entnommenen gemästeten Fische aufgestellt. Von dem Bedienungsraum 19 ist ein Vorratsraum 20 abgeteilt und an den Bedienungsraum sind Wirtschaftsräume 21 für das die Anlage betreibende Personal aufgebaut. Außerhalb dieser Räume sind drei Futtersilos 22 für das Fischfutter aufgestellt.

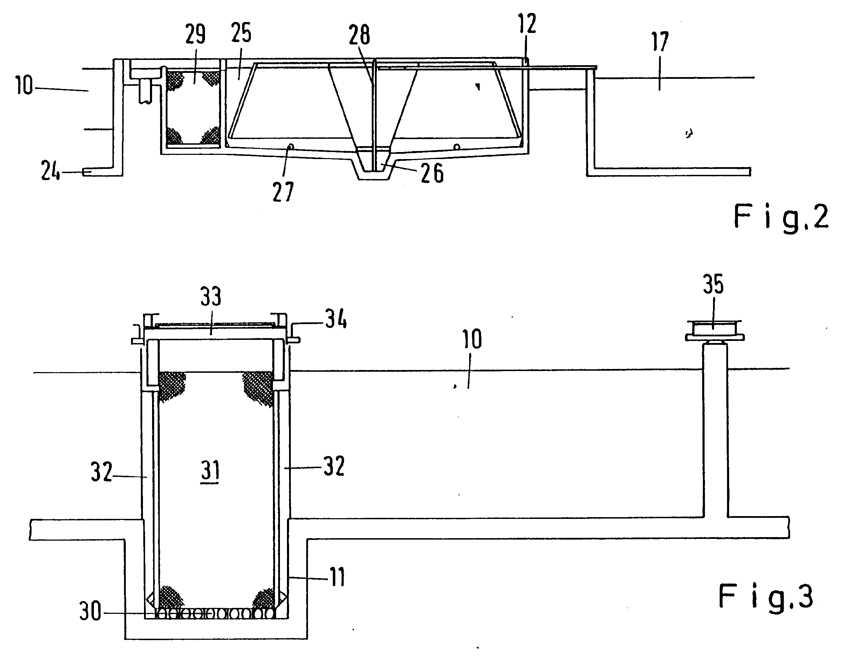

Figur 2 zeigt einen Vertikalschnitt durch ein Absetzbecken 12 mit seinen Zu- und Ableitungen. In der Zeichnung von links kommt durch ein Rohr 24 das vom Boden des Fischbeckens 10 abgesaugte, durch die Fischabscheidungen und die Futterreste verunreinigte Fischwasser und wird einer V-förmigen Kammer 25 an der inneren Umfangsfläche des runden Absetzbeckens 12 so zugeführt, daß es in der ringförmigen Kammer 25 im Uhrzeigersinn strömt. In dieser relativ langsamen Strömung setzt sich der Schlamm nach unten ab und wird

2

durch einen Spalt in den Bodenraum des Absetzbeckens 12 gedrückt, von wo er sich zur vertieften Mitte 26 des Absetzbeckens bewegt. Auf diesem Weg passiert der Schlamm eine sauerstoffzuführende Rohrleitung 27 am Boden des Absetzbeckens 12. Der aus der Rohrleitung 27 austretende Luft-Sauerstoff klärt den Schlamm in einem ersten Schritt nach dem Belebtschlamm-Verfahren (Nitrifikation). Aus der Vertiefung 26 wird der Schlamm über ein Rohr 28 abgesaugt und dem Sammelbecken 17 zugeführt.

Das saubere Wasser wird von der Oberfläche des Absetzbeckens 12 abgesaugt und einerseits durch eine nach dem Mammut-Pumpen-Effekt arbeitende Pumpe 29 zurück in das Fischbecken 10 gepumpt und andererseits zu einem kleineren Anteil in die Kammer 25, so daß eine den Autritt des Schlammes aus der Kammer 25 begünstigende Strömung zwischen der Kammer und dem übrigen Innenraum des Absetzbeckens 12 aufrechterhalten wird.

Figur 3 zeigt einen Querschnitt durch ein Teil eines Fischbeckens 10 mit dem Graben 11 in der Mittellängsachse des Fischbeckens. Am Boden des Grabens 11 sind Polyurethanschläuche 30 unter einer Vorspannung verlegt, so daß sie in ihrer Längsrichtung leicht gedehnt sind. Die Schläuche 30 weisen an ihrer Oberseite kleine Öffnungen auf, durch die ein durch die Schläuche 30 strömendes Luft-Sauerstoff-Gemisch feinverteilt austreten kann. Über den Schläuchen 30 ist ein in den Graben 11 eingesetzter und bis zur Wasseroberfläche des Fischbeckens 10 reichender Füllkörper 31 angeordnet. Der Füllkörper 31 ist aus einer Packung wabenförmiger, miteinander verbindbarer Kunststoffteile 36 aufgebaut, die senkrecht verlaufende Strömungskanäle bilden. In die unteren Öffnungen dieser Strömungskanäle treten die aus den Schläuchen 30 austretenden feinverteilten Luft-Sauerstoff-Blasen ein und reißen das Fischwasser nach dem Mammut-Pumpen-Effekt in den senkrechten Strömungskanälen des Füllkörpers 31 mit, das mit Sauerstoff angereichert am oberen Ende der Strömungskanäle austritt und nach rechts und links in die beiden Hälften des Fischbeckens 10 zurückströmt. Auf diese Weise wird das gesamte Fischwasser im Fischbecken 10 dreißigmal pro Stunde umgewälzt und gleichzeitig mit Sauerstoff angereichert, d.h. innerhalb von 2 Minuten wird der gesamte Inhalt eines Fischbeckens 10 durch den Füllkörper 31 umgewälzt. Bei den bekannten Kunstteichen zur Fischmast ist es üblich, das Fischwasser sechsmal pro Tag umzuwälzen. Beim Umwälzen wird das Fischwasser durch den an dem Füllkörper 31 festhaftende Mikroorganismen biologisch nach dem Adhäsiv-Belebtschlamm-Verfahren gereinigt, d.h. nitrifiziert, so daß mit geringem technischen Aufwand und mit geringem Energieaufwand zu jeder Zeit ein Höchstmaß an Reinheit des Fischwassers gewährleistet ist. Unter Nitrifikation versteht man die Oxidation vom Ammoniak über Nitrit zu Nitrat über im Wasser lebende Bakterien.

Die relativ hohe Strömungsgeschwindigkeit in dem Füllkörper 31 verhindert einen Bewuchs der Innenflächen des Füllkörpers. Der Bewuchs, der sich während des Betriebes der Fischbecken 10 an der äußeren Oberfläche der Schläuche 30 gebildet hat, wird von Zeit zu Zeit abgesprengt. Hierzu wird die an den Schläuchen 30 angelegte Vorspannung weggenommen, d.h. die Schläuche werden entdehnt und die Zufuhr des Luft-Sauerstoff-Gemisches abgestellt.

Die den Füllkörper 31 im Graben 11 haltenden Seitenwände 32 enden etwa auf der Höhe der obersten zwei bis drei Kunststoffwaben 36 des Füllkörpers, so daß das aus der Oberseite des Füllkörpers 31 austretende belüftete Fischwasser problemlos nach beiden Seiten in das Fischbecken 10 zurückfließen kann.

Ein mechanischer Aufbau 33 am oberen Endstück des Füllkörpers 31 dient unter anderem zur Befestigung einer Schiene 34, in der ebenso wie in einer an der gegenüberliegenden Längswand des Fischbeckens 10 befestigten Schiene 35 ein Netz geführt ist, das senkrecht nach unten gespannt ist und dessen untere Netzkante in Schienen im Fischbeckenboden geführt ist, die in der Zeichnung nicht dargestellt sind. Anstelle des Netzes kann auch ein Metallgitter aus vorzugsweise senkrechten und parallel im Abstand zueinander verlaufenden Stäben verwendet werden. Auf diese Weise ist es möglich, das Netz bzw. das Gitter parallel zur Stirnwand des Fischbeckens 10 durch das Fischbecken zu führen und dabei die Fische auf einem kleinen Raum des Fischbeckens zusammenzudrängen, damit sie gegebenenfalls leicht entnommen werden können. Zweckmäßigerweise verwendet man Netze unterschiedlicher Maschenweite oder Gitter unterschiedlichen Stababstandes, so daß die Fische mittels der Netze oder Gitter nach ihrer Größe sortiert werden können. Dies ist insbesondere dann erforderlich, wenn man die verkaufsfähigen, gemästeten Fische abtrennen will. Die auf diese Weise aussortierten verkaufsfähigen Fische werden dann in das Hälterungsbecken 18 übernommen, dessen Wasser etwas kälter als das Fischwasser in dem Fischbecken 10 ist. Das Aussortieren der verkaufsfähigen Fische kann auch noch durch vertikal bewegbare Netze an einem Ende der länglichen Fischbecken 10 erleichtert werden.

Durch die schnelle und häufige Umwälzung des Fischwassers in den Fischbecken 10 ist der Frischwasserbedarf der Anlage sehr gering. Je nach Fischart werden 50 bis 500 Liter Frischwasser pro kg Fischzuwachs dem Beckenwasser zugesetzt, d.h. bei einem 500 m³ Fischwasser enthaltenen Becken sind das ca. 1 bis 10 m³ pro Stunde, die zweckmäßigerweise aus einem in der Nähe der Anlage befindlichen Tiefbrunnen gedeckt werden, so daß das zugesetzte Frischwasser frei von Schwermetallen und Eisenoxiden ist. Statt des Frischwasserzusatzes kann auch eine Aufbereitung des Beckenwassers, beispielsweise durch Reversosmose erfolgen, so daß der Anteil des aufbereiteten Wassers dem vogenannten Frischwasserbedarf entspricht. Es ist wichtig, daß der Fischwasserkreislauf an keiner Stelle und zu keiner Zeit anaerob verläuft. Um den pH- Wert des Beckenwassers konstant zu halten, wird dem Beckenwasser zweckmäßigerweise in den Absetzbecken 12 Kalkmilch zugesetzt. Die Temperatur des Beckenwassers beträgt je nach Fischart 16 bis 28°C. Die Aufheizung des Fischwassers erfolgt allein durch die beim Stoffwechsel der Fische freiwerdende Wärme, so daß zusätzliche Wärmeenergie nicht aufgebracht werden muß.

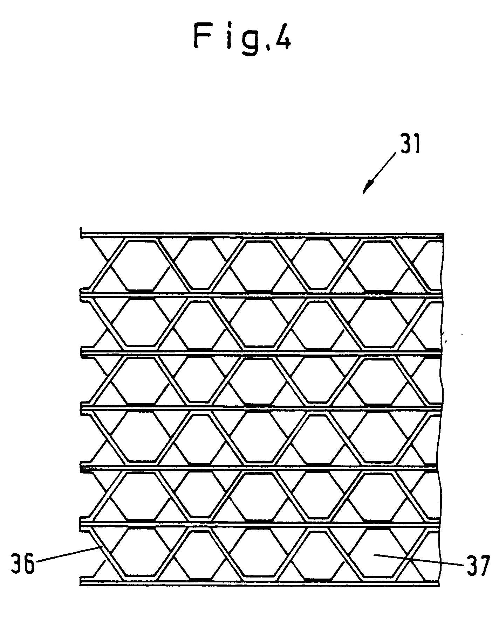

Den Aufbau des Füllkörpers 31 zeigt die Schnittdarstellung in Figur 4. Der Füllkörper 31 besteht aus einer Packung miteinander verklebter oder verschweißter wabenförmiger Kunststoffteile 36, die so übereinander angeordnet sind, daß die einzelnen Waben senkrechte Strömungskanäle 37 für das Fischwasser bilden, das durch das aus den Schläuchen 30 austretende feinblasige Luft-Sauerstoff-Gemisch nach oben mitgerissen wird und am oberen Ende der Strömungskanäle austritt.

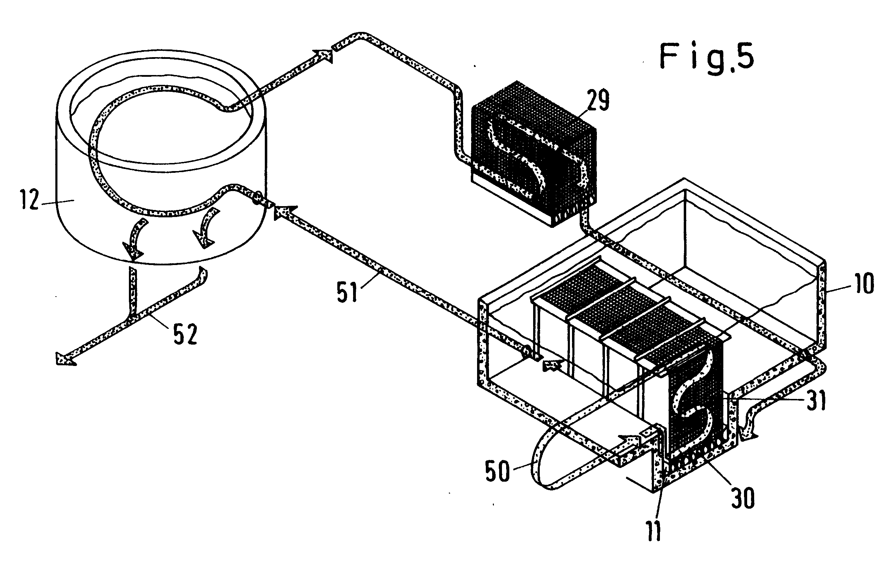

Der gesamte Wasserumlauf in der Anlage ist in dem Flußdiagramm gemäß Figur 5 schematisch dargestellt. In dem Graben 11 des Fischbeckens 10 ist der Füllkörper 31 über den Schläuchen 30 zu erkennen. Durch den bereits beschriebenen Mammut-Pumpen-Effekt wird das Fischwasser mit Hilfe des Füllkörpers 31 etwa dreißigmal pro Stunde entlang der mit 50 bezeichneten Fließbahn umgewälzt und dabei mit Luftsauerstoff angereichert. In einem zweiten Fischwasserkreislauf 51 wird das mit sedierten Fischverunreinigungen und Futterresten angereicherte Fischwasser vom Boden des Fischbeckens 10 abgesaugt und dem ringförmigen peripheren Raum 25 des Absetzbeckens 12 zugeführt. Dort setzen sich die Verunreinigung in der eingangs beschriebenen Weise ab und werden über die Leitung 16 dem Becken 17 zugeführt (siehe Figur 1 und 2). In Figur 5 ist das mit dem Flußpfeil 52 angedeutet. Das geklärte Fischwasser wird aus dem Absetzbecken 12 mit Hilfe der ebenfalls nach dem Mammut-Pumpen-Effekt arbeitenden Pumpe 29 abgesaugt und dem Fischbecken 10 an derjenigen Seite zugeführt, die der Absaugseite des verunreinigten Fischwassers gegenüberliegt. Damit ist gewährleistet, daß das gereinigte Fischwasser die gesamte Länge des Fischbeckens 10 durchläuft, bevor es zusammen mit den Verunreinigungen wieder abgesaugt wird.

Sowohl der Abbau der Fischverunreinigungen und der Futterreste sowie die Reinigung des Fischwassers erfolgen also nach einem biologischen Prozeß. Dadurch ist es möglich, die Anlage im Recycling-Verfahren zu betreiben, was - wie bereits erwähnt - zu einem sehr geringen Frischwasserbedarf führt. Das aber ermöglicht wiederum den Verzicht auf jegliche Fremdheizung des Fischwassers.

Die Fütterung der Fische erfolgt über in der Zeichnung nicht dargestellte Automaten, so daß eine Überfütterung ausgeschlossen wird und der Anfall an nicht verbrauchten Futterresten im Fischwasser minimiert wird.

Durch den modularen Aufbau der Gesamtanlage ist es jederzeit ohne Schwierigkeiten möglich, die Kapazität der Anlage dem jeweiligen Fischbedarf durch Anbau weiterer Becken bzw. Stillegung vorhandener Becken anzupassen.

## Patentansprüche

1. Anlage zur Intensiv-Fischmast mit einem mit Fischwasser gefüllten Fischbecken (10), das eine Vorrichtung (30) zur Zuführung von Luft und/oder Sauerstoff zu dem Fischwasser und einen bis an die Fischwasseroberfläche reichenden vom Fischwasser durchströmbaren Füllkörper (31) aufweist, der senkrechte Strömungskanäle (37) aufweist, in die an ihren unteren Endstücken ein Luft-Wasser- und/ oder Sauerstoff-Wassergemisch einleitbar ist, das an ihren oberen Endstücken in das Fischwasser ausleitbar ist, dadurch gekennzeichnet, daß das als Langbecken ausgebildete Fischbecken (10) entlang seiner Mittellängsachse eine Vertiefung in Form eines Grabens (11) aufweist, in dem der vom Fischwasser durchströmbare Füllkörper (31) angeordnet ist, daß die Strömungskanäle (37) vom unteren Bereich des Grabens (11) bis nahezu zur Fischwasseroberfläche verlaufen, daß unterhalb der eintrittsöffnung in die Strömungskanäle (37) eine Schlauchanordnung zur Zuführung von Luft oder Sauerstoff vorgesehen ist, und daß dem Fischbecken (10) eine außerhalb davon in einem zweiten Fischwasserkreislauf (51) liegende Vorrichtung (12) zur Entfernung von Fischverunreinigungen und Futterresten nachgeschaltet ist, die über eine im Bodenbereich des Fischbeckens (10) mündende Absaugleitung (13), eine Rückleitung (14) und eine Pumpe (15) mit dem Fischbecken (10) verbunden ist.

2. Anlage nach Anspruch 1, dadurch gekennzeichnet, daß die Vorrichtung (12) zur Entfernung von Fischverunreinigungen und Futterresten ein Absetzbecken ist.

3. Anlage nach Anspruch 1 oder 2, dadurch gekennzeichnet, daß der Füllkörper (31) aus einer Packung verbindbarer, wabenförmiger Kunststoffteile (36) aufgebaut ist, die die Strömungskanäle (37) bilden.

4. Anlage nach einem der Ansprüche 1 bis 3, dadurch gekennzeichnet, daß Schäuche (30), vorzugsweise Polyurethanschläuche, für die Zuführung von Luft unterhalb der Eintrittsöffnungen in die Strömungskanäle (37) des Füllkörpers (31) Öffnungen aufweisen, durch die die von einem Gebläse durch die Schläuche (30) geförderte Luft zusammen mit dem mitgerissenen Wasser in die Strömungskanäle (37) aufsteigen kann.

5. Anlage nach einem der Ansprüche 1 bis 4, dadurch gekennzeichnet, daß dem Fischbecken (10) ein Hälterungsbecken (18) für die gemästeten, zum Verkauf bestimmten Fische zugeordnet ist.

6. Anlage nach einem der Ansprüche 1 bis 5, dadurch gekennzeichnet, daß das Fischbecken (10) Netze oder Gitter aufweist, mittels derer die Fische im Fischbecken (10) getrennt haltbar sind.

7. Verfahren zum Betrieb einer Anlage nach einem der Ansprüche 1 bis 6, dadurch gekennzeichnet, daß das Wasser in dem Fischbecken (10) auf einer gleichmäßigen, der Fischart angepaßten Temperatur gehalten wird, daß den Strömungskanälen (37) in dem Füllkörper (31) ein kontinuierlicher Luftstrom durch die Einlaßöffnungen zugeführt wird, so daß das Fischwasser nach dem Mammut-Pumpen-Effekt durch die in den senkrechten Strömungskanälen aufsteigende Luft mitgerissen und das Wasser in dem Fischbecken (10) belüftetet und etwa dreißigmal pro Stunde über den Füllkörper (31) umgewälzt wird, daß das Wasser in dem Fischbecken (10) durch an dem Füllkörper (31) festhaftende Mikroorganismen biologisch nach dem Adhäsiv-Belebschlamm-Verfahren gereinigt wird, daß der pH-Wert des Wassers in dem Fischbecken (10) durch Zugabe von Kalkmilch in das Wasser des Absetzbeckens (12) nahezu konstant gehalten wird, und daß von Boden des Fischbeckens (10) Wasser in das Absetzbecken (12) abgesaugt wird, das in gereinigtem Zustand in das Fischbecken (10) zurückgepumpt wird.

8. Verfahren nach Anspruch 7, dadurch gekennzeichnet, daß dem Wasser in dem Fischbecken (10) kühleres Frischwasser aus einem Tiefbrunnen oder einem Hälterungsbecken (18) zugesetzt wird, vorzugweise in einer Menge von 50 bis 500 Liter pro kg Fischzuwachs je nach Fischart bzw. 1 bis 10 m³/Std. bei einem Beckeninhalt von 500 m³.

9. Verfahren nach Anspruch 7, dadurch gekennzeichnet, daß das Wasser in dem Fischbecken (10) aufbereitet wird, so daß der aufbereitete Anteil einem Fischwasserzusatz von 50 bis 500 Liter pro kg Fischzuwachs je nach Fischart bzw. von 1 bis 10m³/Std. bei einem Beckeninhalt von 500 m³ entspricht.

10. Verfahren nach einem Ansprüche 7 bis 9, dadurch gekennzeichnet, daß das Wasser in dem Fischbecken (10) und dem Hälterungsbecken (18) stets aerob gehalten wird.

## Claims

1. System for intensive fish fattening, comprising a fish tank (10) filled with fish water, said fish tank (10) being provided with a device (30) for feeding air and/or oxygen to the fish water as well as a filler (31) which reaches up to the water surface and through which the fish water flows, said filler (31) having vertically oriented flow channels (37) into which can be introduced at their lower end portion an air-water mixture and/or oxygen-water mixture which can be conveyed out in the fish water at their upper end portion, characterized in that the fish tank (10) is designed as a long tank, having along its middle longitudinal axis a depression in the form of a pit (11), in which is arranged the filler (31) through which the fish water can flow, in that the flow channels (37) extend from the lower region of the pit (11) virtually up to the fish water surface, in that a hose arrangement is provided underneath the inflow orifice into the flow channels (37) through which air or oxygen can be conveyed, and in that the fish tank (10) is connected with a device (12) for removing fish impurities and feed residues, said device (12) lying externally in a second fish water circulation system (51) and being connected with the fish tank (10) by a suction line (13) extending to the bottom portion of the fish tank (10), by a return line (14) and by a pump (15).

2. System according to claim 1, charaterized in that the device (12) for removing fish impurities and feed residues is a settling tank.

3. System according to claim 1 or 2, characterized in that the filler (31) is composed of a pack of connectable honey comb-shaped plastic articles (36) which form the flow channels (37).

4. System according to one of claims 1 to 3, characterized in that hoses (30), preferably polyurethane hoses, for supplying air are provided underneath the inflow orifices into the flow channels (37) of the filler (31) with orifices through which the air conveyed through the hoses (30) by a blower can ascend into the flow channels (37) together with the water dragged along.

5. System according to one of the claims 1 to 4, characterized in that a holding tank (18) is associated to the fish tank (10) for fattened fish ready for sale.

6. System according to one of the claims 1 to 5, characterized in that the fish tank (10) comprises nets or grids by means of which the fish can be kept separately in the fish tank (10).

7. Process for operating a system according to one of claims 1 to 6, characterized in that the water in the fish tank (10) ist maintained at an uniform temperature suitable for the type of fish, in that a continuous air stream is supplied through the inlet orifices to the flow channels (37) in the filler (31), so that the fish water is dragged along according to the mammoth pump effect by the air rising in the vertical flow channels (37) and the water in the fish tank (10) is ventilated and circulated approximately 30 times per hour via the filler (31), in that the water in the fish tank (10) is purified biologically according to the adhesive activated-sludge process by microorganisms adhering to the filler (31), and in that the pH value of the water in the fish tank (10) is kept virtually constant by the addition of milk of lime to the water of the settling tank (12), and in that water is sucked off from the bottom of the fish tank (10) into the settling tank (12) which is pumped back into the fish tank (10) in the purified state.

8. Process according to claim 7, characterized in that cooler fresh water from a deep well or from a holding tank (18) is added to the water in the fish tank (10), preferably in a quantity of 50 to 500 litres per kg of growing fish, depending on the type of fish, or 1 to 10 $m^3$ per hour for a tank content of 500 $m^3$.

9. Process according to claim 7, characterized in that the water in the fish tank (10) is treated, so that the treated fraction corresponds to an addition of fresh water of 50 to 500 litres per kg of growing fish, depending on the type of fish, or 1 to 10 $m^3$ per hour for a tank content of 500 $m^3$.

10. Process according to one of claims 7 to 9, characterized in that the water in the fish tank (10) and the holding tank (18) is kept constantly aerobic.

**Revendications**

1. Installation pour l'engraissement intensif des poissons comprenant un bassin à poissons (10) rempli avec une eau à poissons, comportant un dispositif (30) d'amenée d'air et/ou d'oxygène vers l'eau à poissons ainsi qu'un corps de remplissage (31) pouvant être traversé par l'eau à poissons et s'étendant jusqu'à la surface de l'eau à poissons, et qui présente des canaux d'écoulement (37) verticaux, dans lesquels, à leurs tronçons d'extrémité inférieurs, on peut introduire un mélange air-eau et/ou oxygène-eau, qui, à leurs tronçons d'extrémité supérieurs, peut être sorti pour rentrer dans l'eau à poissons, caractérisé en ce que le bassin à poissons (10) réalisé en tant que bassin en longueur présente le long de son axe longitudinal médian un creux sous la forme d'un fossé (11), dans lequel est disposé le corps de remplissage (31) pouvant être traversé par l'eau à poissons, en ce que les canaux d'écoulement (37) s'étendent de la zone inférieure du fossé (11) jusqu'à proximité de la surface de l'eau à poissons, en ce qu'il est prévu une disposition de tuyaux pour l'amenée de l'air ou de l'oxygène, en-dessous de l'ouverture d'entrée dans les canaux d'écoulement (37), et en ce qu'est prévu à la suite du bassin à poissons (10) un dispositif (12) situé à l'extérieur de celui-ci dans une seconde circulation d'eau à poissons (51), destiné à éliminer des impuretés produites par les poissons et des restes de nourriture, ledit dispositif étant relié au bassin à poisson (10) par l'intermédiaire d'une conduite d'aspiration (13) débouchant dans la zone de fond du bassin à poissons (10), par une conduite de retour (14) et une pompe (15).

2. Installation suivant la revendication 1, caractérisée en ce que le dispositif (12) destiné à l'élimination des impuretés produites par les poissons et des restes de nourriture est un bassin de décantation.

3. Installation suivant la revendication 1 ou 2, caractérisée en ce que le corps de remplissage (31) est constitué par une garniture d'éléments en matière synthétique à alvéoles (36) pouvant être reliés les uns aux autres, qui forment les canaux d'écoulement (37).

4. Installation suivant l'une des revendications 1 à 3, caractérisée en ce que des tuyaux (30), de préférence des tuyaux en polyuréthane, présentent des ouvertures pour l'amenée d'air, en-dessous des ouvertures d'entrée dans les canaux d'écoulement (37) du corps de remplissage (31), permettant à l'air convoyé par une soufflante à travers les tuyaux (30) de monter dans les canaux d'écoulement (37) ensemble avec l'eau entraînée de force.

5. Installation suivant l'une des revendications 1 à 4, caractérisée en ce qu'un bassin de regroupement (18) des poissons engraissés et destinés à la vente est associé au bassin à poisson (10).

6. Installation suivant l'une des revendications 1 à 5, caractérisée en ce que le bassin à poissons (10) présente des filets ou des grilles à l'aide desquels les poissons dans le bassin à poisson (10) peuvent être gardés séparément.

7. Procédé pour faire fonctionner une installation suivant l'une des revendications 1 à 6, caractérisé en ce que l'eau dans le bassin à poissons (10) est maintenue à une température constante adaptée à l'espèce de poisson, en ce qu'un courant d'air continu est amené dans les canaux d'écoulement (37) dans le corps de remplissage (31) à travers les ouvertures d'entrée, de sorte que l'eau à poisson, suivant l'effet de pompe mammouth, est entraînée de force par l'air ascendente dans les canaux d'écoulement verticaux et que l'eau est aérée dans le bassin à poisson (10) et circule environ trente fois par heure sur le corps de remplissage (31), en ce que l'eau dans le bassin à poisson (10) est épurée biologiquement suivant le procédé de la boue activée adhésive, par des micro-organismes adhérent au corps de remplissage (31), en ce que la valeur pH de l'eau dans le bassin à poissons (10) est maintenue pratiquement constante par l'addition de lait de chaux dans l'eau du bassin de décantation (12), et en ce que de l'eau est aspirée du fond du bassin à poissons (10) dans le bassin de décantation (12) qui est ramenée par pompage dans l'état épuré dans le bassin à poissons (10).

8. Procédé suivant la revendication 7, caractérisé en ce que l'on ajoute à l'eau dans le bassin à poissons (10) de l'eau fraîche plus froide d'un puits profond ou d'un bassin de regroupement (18), de préférence en une quantité allant de 50 à 500 litres par kg d'accroissement de poisson, selon l'espèce de poisson, ou de 1 à 10 m³/heure pour un contenu de bassin de 500 m³.

9. Procédé suivant la revendication 7, caractérisé en ce que l'eau est traitée dans le bassin à poissons (10), de sorte que la partie traitée correspond à une addition d'eau de poisson de 50 à 500 litres par kg d'accroissement de poisson, suivant l'espèce de poisson, ou de 1 à 10 m³/heure pour un contenu de bassin de 500 M³.

10. Procédé suivant l'une des revendications 7 à 9, caractérisé en ce que l'eau dans le bassin à poisson (10) et dans le bassin de regroupement (18) est toujours maintenue dans l'état aérobie.

# Fig.1

Fig.2

Fig.3

EP 0 270 640 B1

# F i g . 4

Fig.5